# EUROPEAN PATENT APPLICATION

(11) **EP 4 397 432 A1**
(43) Date of publication of application: **10.07.2024**
(21) Application number: 23753137.1
(22) Date of filing: 08.02.2023
(51) Int. Cl.: B23K 35/30, B23K 35/02, C22C 38/22, C22C 38/32

(54) **FLUX CORED WIRE FOR TWIN WIRE ARC SPRAY**

(30) Priority: 10.02.2022 KR 20220017232
(71) Applicant: Kolon Industries, Inc., Seoul 07793 (KR)
(72) Inventor: KIM, Choongnyun Paul, Seoul 07793 (KR); HAM, Gi Su, Seoul 07793 (KR)
(74) Representative: Ter Meer Steinmeister & Partner
(86) International application number: PCT/KR2023/001802
(87) International publication number: WO 2023/153789

(57) **Abstract**

According to one aspect of the present disclosure, a flux-cored wire provided can effectively enhance the wear resistance of a coating layer by ensuring the formation of carbides and borides above a certain level within the coating layer when applying twin wire arc spray, while actively suppressing the formation of pores and oxides within the coating layer.

## Description

### TECHNICAL FIELD

The present disclosure relates to a flux-cored wire filled with Fe-based alloy flux in a steel sheath.

### BACKGROUND ART

Twin wire arc spray (TWAS) is a spray method used to form a coating layer in various technical fields, utilizing an electric arc generated at an intersection of two wires to melt the wires, and then spraying the molten wires onto the workpiece to form a coating layer.

There are a variety of wire materials applied to twin wire arc spray, among them, a flux-cored wire filled with alloy powder in a steel sheath is the most representative. When performing twin wire arc spray with the flux-cored wire, a coating layer in which the sheath and the alloy powder are uniformly mixed may be formed.

To enhance the wear resistance of materials applied to wear-resistant environments, a method of forming a hard spray coating layer on the surface of the material is being used. However, when forming the spray coating layer using twin wire arc spray, pores and oxides are inevitably formed within the coating layer, so there are limitations to applying the materials in extreme wear-resistant environments.

Patent Document 1 proposes a method of forming an amorphous alloy spray coating layer on the surface of the material, which has advantageous properties in terms of wear resistance. However, Patent Document 1 fails to disclose a practical solution for suppressing the formation of pores and oxides within the coating layer when applying twin wire arc spray, to enhance wear resistance.

(Patent Document 1) Korean Patent Registration No. 10-2301383

### DISCLOSURE OF THE INVENTION

### TECHNICAL PROBLEM

According to one aspect of the present disclosure, a flux-cored wire provided can effectively enhance the wear resistance of a coating layer by ensuring the formation of carbides and borides above a certain level within the coating layer when applying twin wire arc spray, while actively suppressing the formation of pores and oxides within the coating layer.

The object of the present disclosure is not limited to the above description. Those skilled in the art will readily understand the additional objects of the present disclosure from this application.

### TECHNICAL SOLUTION

One aspect of the present disclosure is,
to provide a flux-cored wire with a stainless steel sheath filled with flux,
wherein the flux is alloy powder which includes, by weight%, chromium (Cr): 13.0 to 18.0 %, boron (B): 1.0 to 7.0 %, carbon (C): 0.5 to 3.0 %, molybdenum (Mo): 6.0 to 25.0%, silicon (Si): 1.0% or less (including 0%), manganese (Mn): 1.0% or less (including 0%), by weight%, the remainder of iron (Fe) and inevitable impurities.

Alternatively, according to one aspect of the present disclosure, the flux may be alloy powder which includes, by weight%, chromium (Cr): 14.0 to 15.0 %, boron (B): 3.5 to 4.5 %, carbon (C): 0.5 to 1.0 %, molybdenum (Mo): 8.0 to 9.0%, silicon (Si): 0.1% or less (including 0%), manganese (Mn): 0.1% or less (including 0%), the remainder of iron (Fe) and inevitable impurities.

Alternatively, according to one aspect of the present disclosure, the stainless steel sheath may be stainless steels such as SUS 304, STS 316L, STS 430, STS 630, etc.

Alternatively, according to one aspect of the present disclosure, the flux-cored wire may have a diameter of 1.6 to 3.2 mm, and wherein the stainless steel sheath may have a thickness of 0.3 to 0.8 mm.

Alternatively, according to one aspect of the present disclosure, the flux-cored wire may form a coating layer by forming twin wire arc spraying, with a carbides and borides fraction of 8 area% or more, an oxides fraction of 9 area% or less and a porosity of 2.5% or less.

The means for solving the above-mentioned problems do not list all features of the present disclosure, and the various features of the present disclosure and their corresponding advantages and effects can be more fully understood by referring to the specific examples below.

### ADVANTAGEOUS EFFECTS

According to one aspect of the present disclosure, a flux-cored wire provided can effectively enhance the wear resistance of a coating layer by ensuring the formation of carbides and borides above a certain level within the coating layer when applying twin wire arc spray, while actively suppressing the formation of pores and oxides within the coating layer.

The effects of the present disclosure are not limited to the above, and may be interpreted to include matters that can be reasonably inferred from the matters described in this specification.

### BRIEF DESCRIPTION OF THE DRAWINGS

FIGS. 1 to 5 are scanning electron microscope (SEM) images of coating layers formed by flux-cored wires No. 1 to No.5.
FIGS. 6 to 10 are EBSD phase maps of coating layers formed by flux-cored wires No. 1 to No.5.

### BEST MODE FOR CARRYING OUT THE INVENTION

The present disclosure relates to a flux-cored wire, and the following will describe preferred example embodiments of the present disclosure. The embodiments of the present disclosure can be varied in many ways and should not be construed as being limited to the example embodiments described below. These example embodiments are provided to convey more details about the present disclosure to those of ordinary skill in the art.

According to one aspect of the present disclosure, a flux-cored wire provided includes a stainless steel sheath and a flux filled within the sheath.

The sheath may be a stainless steel including at least about 10 weight% of chromium (Cr), and may be made of any one selected from austenitic, ferritic, martensitic, or duplex stainless steels. Preferably, the sheath may be stainless steels such as SUS 304, STS 316L, STS 430, STS 630, etc. As the sheath forms a coating layer together with the flux during the TWAS process, the sheath is also required to have a certain level of corrosion resistance and mechanical strength. Thus, when using the aforementioned stainless steels as the sheath, corrosion resistance and mechanical strength suitable for the purpose may be secured.

Preferably, the diameter of the flux-cored wire may be 1.6 to 3.2 mm, and the thickness of the stainless steel sheath may be 0.3 to 0.8 mm.

The flux of the present disclosure may be Fe-based alloy powder, by weight%, including chromium (Cr): 13.0 to 18.0 %, boron (B): 1.0 to 7.0 %, carbon (C): 0.5 to 3.0 %, molybdenum (Mo): 6.0 to 25.0%, silicon (Si): 1.0% or less (including 0%), manganese (Mn): 1.0% or less (including 0%), the remainder of iron (Fe) and inevitable impurities.

Hereinafter, the alloy components included in the flux of the present disclosure are described in more detail. Unless otherwise specified, the % indicating the content of each element mentioned hereafter is based on weight.

### Chromium (Cr): 13.0 to 18.0%

chromium (Cr) effectively contributes to strength improvement and the corrosion resistance. According to one aspect of the present disclosure, the flux may include at least 13.0% chromium (Cr) to achieve such effects. Chromium (Cr) may be contained in an amount of 13.5% or more, and more preferably, 14.0% or more. On the other hand, when chromium (Cr) is added excessively, the brittleness of the coating layer may become stronger due to the formation of intermetallic compounds or may cause a decrease in wear resistance of the coating layer due to the excessive formation of chromium-based oxides. Therefore, in the present disclosure, the upper limit of chromium (Cr) content in the flux may be limited to 18.0%. Chromium (Cr) may be contained in an amount of 16.0% or less, and more preferably, 15.0% or less.

### Boron (B): 1.0 to 7.0%

Boron (B) effectively contributes to hardness improvement of the coating layer by forming borides with iron (Fe) and chromium (Cr) within the coating layer. Additionally, boron (B) also effectively enhances the glass forming ability of the coating layer. According to one aspect of the present disclosure, the flux may include at least 1.0% boron (B) to achieve such effects. Boron (B) may be contained in an amount of 2.0% or more, and more preferably, 3.5% or more. On the other hand, when boron (B) is added to the flux excessively, the toughness of the coating layer may decrease due to the overproduction of borides. Therefore, in the present disclosure, the upper limit of boron (B) content in the flux may be limited to 7.0%. Boron (B) may be contained in an amount of 6.0% or less, and more preferably, 4.5% or less.

### Carbon (C): 0.5 to 3.0%

Carbon (C) effectively contributes to strength improvement of the coating layer. According to one aspect of the present disclosure, the flux may include at least 0.5% carbon (C) to achieve such effects. Carbon (C) may be contained in an amount of 0.6% or more, and more preferably, 0.7% or more. Carbon (C) is an element that increase the susceptibility of the high-temperature cracking, when carbon (C) is added excessively, carbon (C) may act as a source of solidification cracks in the coating layer. Therefore, in the present disclosure, the upper limit of carbon (C) content in the flux may be limited to 3.0%. Carbon (C) may be contained in an amount of 2.0% or less, and more preferably, 1.0% or less.

### Molybdenum (Mo): 6.0 to 25.0%

Molybdenum (Mo) effectively contributes to improvement of glass forming ability and hardness. Additionally, molybdenum (Mo) effectively improves the high-temperature stability of steel and can effectively control the formation of Fe-Cr-based oxides in the coating layer. According to one aspect of the present disclosure, the flux may include at least 6.0% molybdenum (Mo) to achieve such effects. Molybdenum (Mo) may be contained in an amount of 7.0% or more, and more preferably, 8.0% or more. On the other hand, when molybdenum (Mo), which has a high affinity for oxygen, is added excessively, the wear resistance of the coating layer may be reduced due to segregation and overproduction of Fe-based/Mo-based oxides. Therefore, in the present disclosure, the upper limit of molybdenum (Mo) content in the flux may be limited to 25.0%. Molybdenum (Mo) may be contained in an amount of 13.0%, and more preferably, the upper limit of the content of molybdenum (Mo) may be 9.0%.

### Silicon (Si): 1.0% or less (including 0%)

Silicon (Si) contributes to improvement of glass forming ability and strength. According to one aspect of the present disclosure, the flux may include a certain amount of silicon (Si) to achieve such effects. However, when silicon (Si) is added excessively, the brittleness may increase, leading to crack formation due to the difference in thermal expansion coefficients. Therefore, in the present disclosure, the content of silicon (Si) in the flux may be limited to 1.0% or less. The upper limit of the content of silicon (Si) may be 0.5%, and more preferably, 0.1%.

### Manganese (Mn): 1.0% or less (including 0%)

Manganese (Mn) contributes to improvement toughness and strength of the coating layer. According to one aspect of the present disclosure, the flux may include a certain amount of manganese (Mn) to achieve such effects. However, manganese (Mn) may lead to the occurrence of defects through slag formation. Therefore, in the present disclosure, the content of manganese (Mn) in the flux may be limited to 1.0% or less. The upper limit of the content of manganese (Mn) may be 0.5%, more preferably, 0.1%.

The flux of the present disclosure may include the remainder of iron (Fe) and other inevitable impurities, in addition to the components mentioned above. That said, in a general manufacturing process, unintended impurities may inevitably be mixed from the raw material or surrounding environment, and thus, these impurities may not be completely exclude. Since these impurities are known to those skilled in the art, all the contents are not specifically mentioned in the present specification. Furthermore, additional addition of effective components other than the above-described components is not entirely excluded.

The average particle size of the flux of the present disclosure is not particularly limited, but as an example embodiment, the average particle size of the flux may be in the range of 400 to 800 *µ*m. Moreover, the method of manufacturing alloy powder forming the flux is not particularly limited, preferably, the atomization method may be applied.

Meanwhile, although not particularly limited, according to one aspect of the present disclosure, the coating layer formed by twin wire arc spraying of the flux-cored wire may include more than 8 area% of carbides and borides, with the oxides fraction being 9 area% or less (including 0%), and the porosity being 2.5% or less (including 0%). Here, the carbides and the borides may be iron-based or chromium-based, and may be interpreted to include Cr₂₃(C,B)₆, Fe₂B, Fe₃C, Cr₂B.

Moreover, although not particularly limited, for example, the lower limit of the above-mentioned carbides and borides fraction in the coating layer may be 0.1%. Alternatively, the lower limit of the above-mentioned oxides fraction in the coating layer may be 0.1%. Alternatively, the porosity of the coating layer may be 0.1%.

Furthermore, although not particularly limited, in the coating layer, a higher fraction of the above-mentioned carbides and borides is preferable. Therefore, in the coating layer, there may be no specific upper limit to the fraction of the mentioned carbides and borides. As an example embodiment, the upper limit of the fraction of carbides and borides may be 30%.

Additionally, in the said coating layer, the measurement methods for the fraction of the mentioned carbides and borides, oxides, and the porosity may be measured through conventional methods, hence the present disclosure does not specifically limit the measurement methods.

### MODE FOR CARRYING OUT THE INVENTION

Hereinafter, the flux-cored wire of the present disclosure is described in more detail through specific example embodiments. The following example embodiments are provided for understanding the present disclosure and are not intended to define the scope of the invention. The scope of the invention may be determined by the matters stated in claims and reasonably inferred therefrom.

### (Example Embodiment)

After preparing the flux by manufacturing alloy powder with the alloy composition shown in Table 1 below and then filling the flux into an STS 316L stainless steel sheath, a flux-cored wire with a diameter of 1.6 mm was manufactured. The alloy components not listed in Table 1 are iron (Fe) and other impurities. A "-" sign indicates that the content of the component is close to 0 wt% within the margin of error. The alloy powder used to manufacture the flux-cored wire No.5 is the conventional material HX70.

**[Table 1]**

| No. | Alloy Composition (wt%) | | | | | | Average Particle Size (*µ*m) |
|---|---|---|---|---|---|---|---|
| | Cr | B | Si | Mn | C | Mo | |
| 1 | 15.5 | 1.04 | 0.5 | - | 2.47 | 18 | 500.3 |
| 2 | 16.9 | 1.54 | - | - | 1.44 | 22.2 | 503.8 |
| 3 | 14.6 | 1.23 | - | - | 2.12 | 24.2 | 501.6 |
| 4 | 4.1 | 4.1 | - | - | 0.77 | 8.6 | 502.7 |
| 5 | 6 | 6 | 0.5 | 0.5 | 0.5 | - | 500.4 |

Twin wire arc welding was performed using each of the flux-cored wires, and a coating layer having a thickness of approximately 400 µm was formed on the surface of S45C. The twin wire arc spraying conditions applied are as follows:

### <Twin Wire Arc Spraying Conditions>

Flux Diameter: 1.6 mm
Volts: 34 to 36 V
Current: 220 to 225 AMPS
Air Pressure: 70 PSI

The porosity and the oxides fraction in the cross-section of each coating layer were measured using a Scanning Electron Microscope (SEM), and the results are listed in Table 2. Component analysis for the cross-section of each coating layer was conducted using the phase map function of an Electron Backscatter Diffraction analyzer (EBSD), and the fraction of carbides and borides is also listed in Table 2.

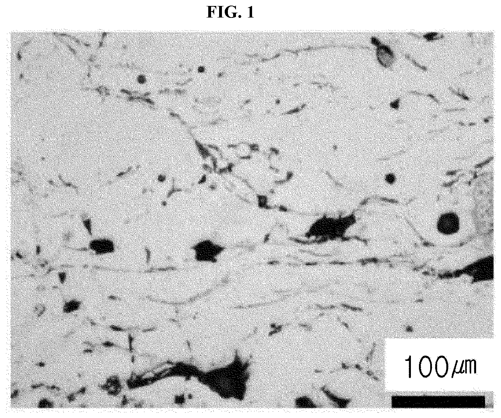

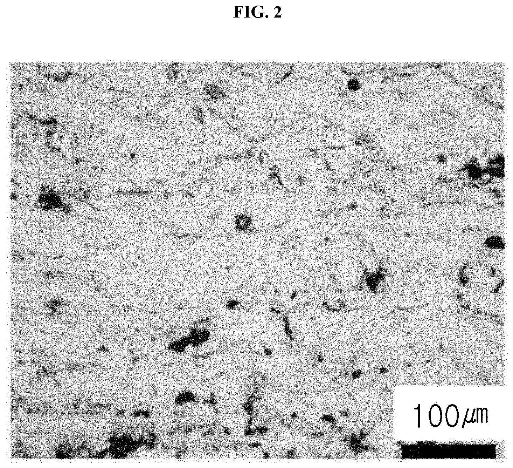

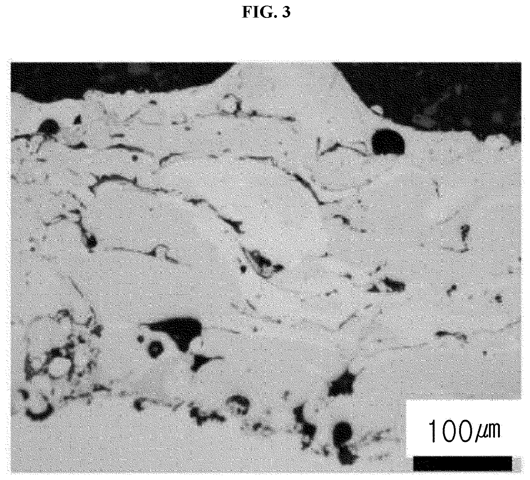

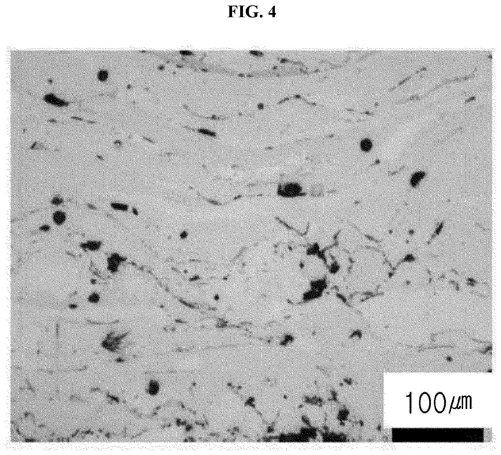

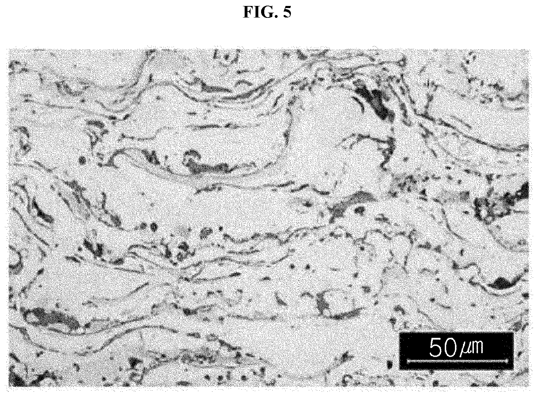

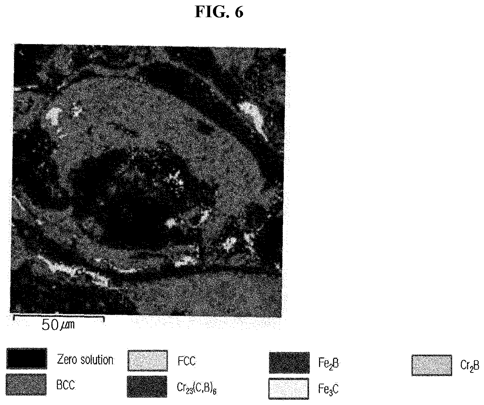

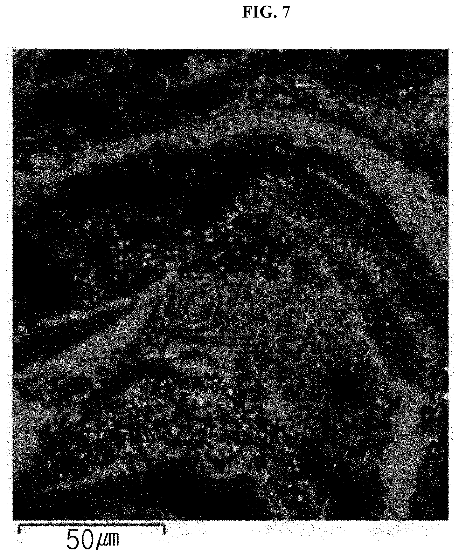

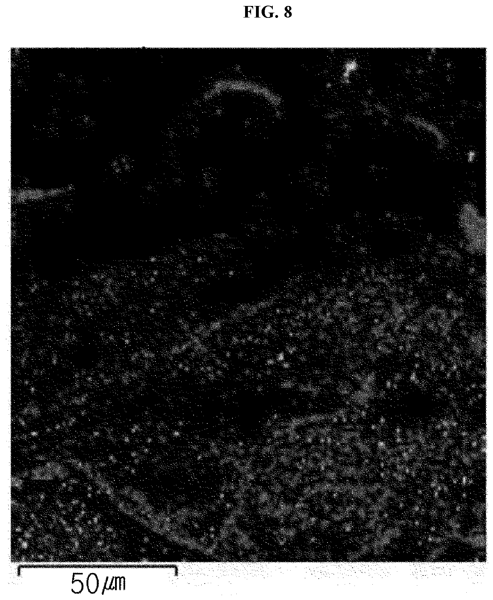

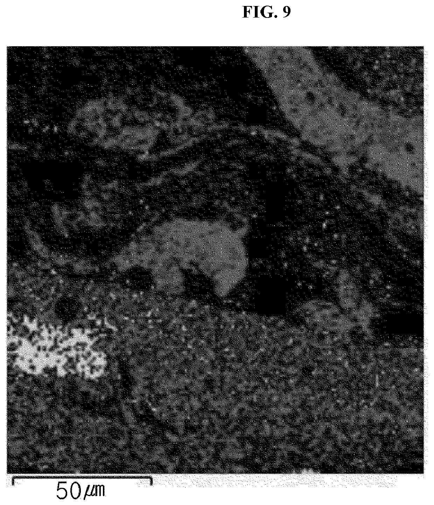

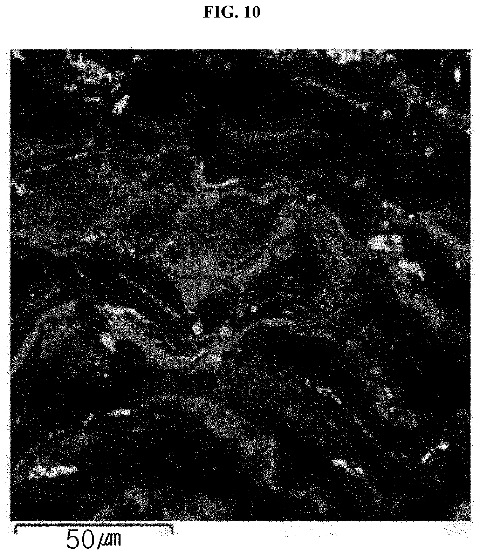

FIGS. 1 to 5 are scanning electron microscope (SEM) images of coating layers formed by flux-cored wires No. 1 to No. 5, and FIGS. 6 to 10 are EBSD phase maps of coating layers formed by flux-cored wires No. 1 to No.5.

**[Table 2]**

| No. | Porosity (%) | Oxides Fraction (area%) | Carbides / Borides Fraction (area%) | | | | |
|---|---|---|---|---|---|---|---|
| | | | Cr₂₃(C,B)₆ | Fe₂B | Fe₃C | Cr₂B | Sum |
| 1 | 2.35 | 8.1 | 13.1 | 0.9 | 0.4 | 0.04 | 14.44 |
| 2 | 2.41 | 7.9 | 8.7 | 1.1 | 1.2 | 0.1 | 11.1 |
| 3 | 2.03 | 7.6 | 5 | 1.9 | 0.6 | 0.8 | 8.3 |
| 4 | 1.88 | 7.3 | 13.6 | 2.7 | 0.37 | 1.4 | 18.07 |
| 5 | 2.72 | 9.6 | 4.8 | 0 | 0.1 | 0 | 4.9 |

As indicated in Table 2, the coating layers produced by the flux-cored wires No. 1 to No.4 according to one aspect of the present disclosure have the porosity of 2.5% or less and the oxides fraction of 9.5 area% or less. In contrast, the coating layer prepared by the conventional material, the flux-cored wire No.5, exceed the porosity of 2.5% and the oxides fraction of 9.5 area%. Moreover, the coating layers produced by the flux-cored wires No.1 to No.4 according to one aspect of the present disclosure have the borides and carbides fraction of 8 area% or more, resulting in relatively improved wear resistance being expected, whereas the coating layer prepared by the conventional material, the flux-cored wire No.5 do not reach the borides and carbides fraction of 8 area%, which is expected to have relatively poor wear resistance.

A wear measurement test was conducted on the coating layers prepared by the flux-cored wires No.4 and No.5, and the results are listed in Table 3 below. In this case, the wear measurement test was performed according to the ASTM G99 pin on disk test method, using the RB 102PD equipment, with a pin (counterpart) of Si₃N₄, a load of 5kgf, and a speed of 0.05m/s.

**[Table 3]**

| No. | Wear Amount (mg) |
|---|---|
| 4 | 0.0023 |
| 5 | 0.0026 |

From Table 3, it can be seen that the coating layer produced by the flux-cored wire No.4 according to one aspect of the present disclosure has improved wear resistance about 15% or more compared to the coating layer produced by the conventional material, the flux-cored wire No.5.

Although the present disclosure has been described in detail through example embodiments above, other example embodiments are also possible. Therefore, the technical spirit and the scope of claims listed below are not limited to these example embodiments.

## Claims

1. A flux-cored wire with a stainless steel sheath filled with flux, wherein
the flux is alloy powder which includes, by weight%, chromium (Cr): 13.0 to 18.0 %, boron (B): 1.0 to 7.0 %, carbon (C): 0.5 to 3.0 %, molybdenum (Mo): 6.0 to 25.0%, silicon (Si): 1.0% or less (including 0%), manganese (Mn): 1.0% or less (including 0%), by weight%, the remainder of iron (Fe) and inevitable impurities.

2. The flux-cored wire of Claim 1, wherein
the flux is alloy powder which includes, by weight%, chromium (Cr): 14.0 to 15.0 %, boron (B): 3.5 to 4.5 %, carbon (C): 0.5 to 1.0 %, molybdenum (Mo): 8.0 to 9.0%, silicon (Si): 0.1% or less (including 0%), manganese (Mn): 0.1% or less (including 0%), the remainder of iron (Fe) and inevitable impurities.

3. The flux-cored wire of Claim 1, wherein
the stainless steel sheath is any one selected from austenitic, ferritic, martensitic, or duplex stainless steels.

4. The flux-cored wire of Claim 1, wherein
the flux-cored wire has a diameter of 1.6 to 3.2 mm, and wherein the stainless steel sheath has a thickness of 0.3 to 0.8 mm.

5. The flux-cored wire of Claim 1, wherein
the flux-cored wire forms a coating layer formed by forming twin wire arc spraying, with a carbides and borides fraction of 8 area% or more, an oxides fraction of 9 area% or less and a porosity of 2.5% or less.
